# EUROPEAN PATENT SPECIFICATION

(11) **EP 3 551 589 B1**
(45) Date of publication and mention of the grant of the patent: **03.04.2024**
(21) Application number: 17854194.2
(22) Date of filing: 16.08.2017
(51) Int. Cl.: C03C 17/36

(54) **SUBSTRATE COATED WITH THERMALLY TREATABLE LOW-E LAYER**
SUBSTRAT MIT BESCHICHTUNG AUS WÄRMEBEHANDELBARER SCHICHT MIT NIEDRIGER EMISSIVITÄT
SUBSTRAT REVÊTU D'UNE COUCHE À FAIBLE ÉMISSIVITÉ POUVANT ÊTRE TRAITÉE THERMIQUEMENT

(30) Priority: 09.12.2016 TR 201618236
(43) Date of publication of application: 16.10.2019
(73) Proprietor: Türkiye Sise Ve Cam Fabrikalari A.S., Istanbul (TR)
(72) Inventor: TÜRKÜZ, Seniz, 34947 Tuzla/Istanbul (TR); GÖREN, Behiç Kerem, 34947 Tuzla/Istanbul (TR); ISMAIL, Hasan, 7700 Targovishte (BG); DENIZ, Birsel, Kocaeli (TR); MEHMED, Reyhan, 7700 Targovishte (BG); SEZGIN, Alperen, 34947 Tuzla/Istanbul (TR); ARPAT, Erdem, 34947 Tuzla/Istanbul (TR); TURUTOGLU, Tuncay, 34947 Tuzla/Istanbul (TR); TUNA, Öcal, 41400 Kocaeli Gebze (TR); ÇEMISKEZEK, Duygu, 34947 Tuzla/Istanbul (TR); ISMAIL, Hasan, 34947 Tuzla (TR); DENIZ, Birsel, 34947 Tuzla (TR)
(74) Representative: Kaya, Erdem
(86) International application number: PCT/TR2017/050393
(87) International publication number: WO 2018/106203

(56) References cited:
- DE-A1-102011 087 967
- US-A1- 2014 272 354
- US-A1- 2016 207 827

## Description

### TECHNICAL FIELD

The present invention relates to a low-emission (low-e) coating used as thermal insulation glass and which transmits daylight and of which the thermal treatment resistance is high and which has infrared reflective layers therein.

### PRIOR ART

One of the actors which change the optical properties of glasses is the coating application applied on glass surface. One of the coating applications is the magnetic field supported sputtering method in the vacuum medium. It is a frequently applied method in production of architectural coatings which have particularly low-e characteristic. By means of said method, the transmittance and reflection values of the coated glasses in the visible, close infrared and infrared region can be obtained at the targeted levels.

Besides the transmittance and reflection values, selectivity is an important parameter in coated glasses. Selectivity is defined as the ratio of visible region transmittance value to the solar factor in ISO 9050 (2003) standard. The selectivity values of the coatings can be kept at the targeted levels by means of the number of Ag layers thereof, the coring layer type used, and the parametric optimizations of the layers.

In the patent with publication number US7901781 B2, a low-e coated glass is disclosed which is mechanically and chemically stable and which can be tempered or of which the thermal resistance is high. The arrangement of the low-e layer, which is the subject matter of said patent, has two silvers, and on the silver arrangements, both oxide form and the metal form of NiCr are positioned one above the other respectively.

The low-e coating, given in the patent with publication number WO2014160414 A1, comprises a first and a second intermediate layer positioned between two reflective layers. Said first intermediate layer comprises zinc tin oxide and the second intermediate layer comprises zinc aluminum oxide. The layer thickness of the first intermediate layer and the second intermediate layer is between 40 nm and 90 nm.

In the invention with publication number US2014272354 A1; a low emissivity panel is disclosed which includes a separation layer of Zn₂SnOₓ between multiple infrared reflective stacks. The low emissivity panels can also include NiNbTiOx as barrier layer. The low emissivity panels have high light to solar gain, color neutral, together with similar observable color before and after a heat treatment process.

In the invention with publication number US2016207827 A1; an insulating glass (IG) window unit is disclosed which includes first and second substrates, and a low-emissivity (low-E) coating supported by one of the substrates. The low-E coating has two silver based infrared (IR) reflecting layers and allows the IG window unit to realize an increased SHGC to U-value ratio, and an increased thickness ratio of an upper silver based layer of the coating to a bottom silver based layer of the coating. The low-E coating is designed to have a low film-side reflectance, so that for example when the low-E coating is used on surface number three of an IG window unit the IG window unit can realize reduced visible reflectance as viewed from the outside of the building on which the IG window unit is mounted or is to be mounted.

### BRIEF DESCRIPTION OF THE INVENTION

The present invention relates to a low-e coated glass, for bringing new advantages to the related technical field.

The main object of the present invention is to provide a low-e coated glass of which the angular color change is reduced and where thermal treatment is applicable.

Another object of the present invention is to provide a low-e coated glass where the infrared reflective layers are prevented from being affected by the crystal structure of the adjacent layers.

Another object of the present invention is to provide a low-e coated glass having a structure which will support prevention of the discontinuity of the infrared reflective layers in thermal treatment.

In order to realize all of the abovementioned objects and the objects which are to be deducted from the detailed description below, the present invention is a low-e coated glass according to claim 1.

In a preferred embodiment of the invention, said intermediate dielectric structure provided in the low-e coating has a second coring layer having a thickness between 20 nm and 30 nm.

In another preferred embodiment of the invention, said intermediate dielectric structure provided in the low-e coating comprises a second dielectric layer with a thickness between 20 nm - 35 nm and third dielectric layer with a thickness between 32 nm - 47 nm.

In a preferred embodiment of the invention, in the low-e coating, said second dielectric layer and said third dielectric layer directly contact each other.

In another preferred embodiment of the invention, in the low-e coating, a surface of the third dielectric layer contacts the second coring layer.

In another preferred embodiment of the invention, the third dielectric layer provided in the low-e coating has an amorphous structure. Thus, the probability of affecting the crystallization of the structure of the second coring layer and formation of undesired residue stress are reduced. Thus, contribution is provided to the growth of the second infrared layer in the required crystallographic orientation.

In a preferred embodiment of the invention, in the low-e coating, said second coring layer directly contacts the second infrared layer.

In another preferred embodiment of the invention, said first coring structure provided in the low-e coating comprises absorbent layer with a thickness between 0.5 nm and 1.5 nm which is in direct contact to a surface of the first infrared layer.

In another preferred embodiment of the invention, the upper dielectric structure comprises an upper dielectric layer comprising SiNₓO_{y} with a thickness between 20 nm and 35 nm and a fourth dielectric layer comprising ZnAlOₓ with a thickness between 10 nm and 25 nm positioned under said upper dielectric layer and which prevents delamination.

### BRIEF DESCRIPTION OF THE FIGURES

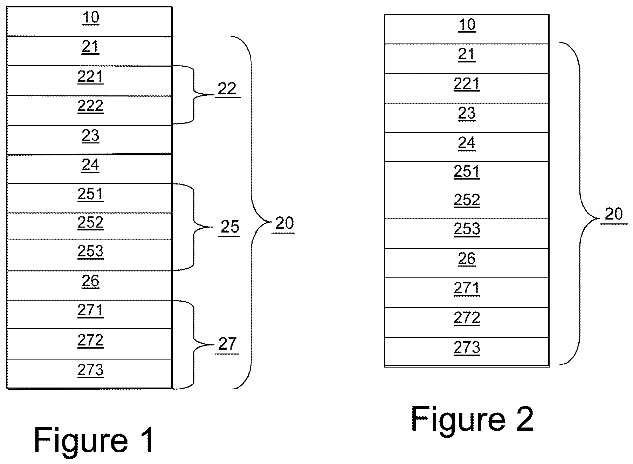

In Figure 1, a general view of the low-e layer arrangement is given.
In Figure 2, a general view of the low-e layer arrangement in the alternative embodiment is given.

### REFERENCE NUMBERS

10 Glass
20 Low-e coating
   21 First dielectric layer
   22 First coring structure
      221 First coring layer
      222 Absorbent layer
   23 First infrared reflective layer
   24 First barrier layer
   25 Intermediate dielectric structure
      251 Second dielectric layer
      252 Third dielectric layer
      253 Second coring layer
   26 Second infrared reflective layer
   27 Upper dielectric structure
      271 Second barrier layer
      272 Fourth dielectric layer
      273 Upper dielectric layer

### DETAILED DESCRIPTION OF THE INVENTION

In this detailed description, the subject matter low-e coated (20) glass (10) is explained with references to examples without forming any restrictive effect only in order to make the subject more understandable.

Production of low-e coated (20) glasses (10) related to architecture and automotive is realized by means of "sputtering" method. The subject matter invention essentially relates to double silvered low-e coated (20) glasses (10) and the ingredient and application of said low-e coating (20) of which the thermal treatment resistance is high and used as thermal insulation glass (10) and which transmits daylight.

In the subject matter invention, a low-e coating (20) is developed comprising pluralities of metal, metal oxide and metal nitride/oxy-nitride layers positioned on the glass (10) surface by using sputtering method in order to obtain a low-e coated (20) glass (10) designed for obtaining an acceptable angular color change and which is thermally treatable and which has intermediate level of visible light transmittance in order to be applied onto the surface of a glass (10). Said layers are accumulated onto each other in vacuum medium. As the thermal process, at least one and/or a number of tempering, partial tempering, annealing and bending processes can be used together. The subject matter low-e coated (20) glass (10) can be used as architectural and automotive glass (10).

In order develop ideal low-e coating (20) arrangement which is thermally treatable in terms of production easiness and optical properties, the below mentioned data are detected as a result of experimental studies.

In the subject matter low-e coating (20), there is a first infrared reflective layer (23) and a second infrared reflective layer (26) which transmits the visible region at the targeted level and which provides reflection (less transmittance) of thermal emission in the infrared spectrum. Ag layer is used as the first infrared reflective layer (23) and the second infrared reflective layer (26), and the thermal emission of Ag layer is low.

In the subject matter low-e coated (20) glass (10), calculative methods are used through optical constants obtained from single layer measurements where the refraction indices of all layers are taken. Said refraction indices are the refraction index data at 550 nm.

A first dielectric layer (21) is used as the lowermost layer which will contact the glass (10) in the subject matter coating. A SiₓN_{y} layer is used as the first dielectric layer (21). SiₓN_{y} layer, which is the first dielectric layer (21), acts as a diffusion barrier, and the SiₓN_{y} layer serves to prevent alkali ion migration which becomes easy at high temperature. Thus, SiₓN_{y} layer, which is the first dielectric layer (21), supports the resistance of the coating (20) against the thermal treatment processes. The change interval of SiₓN_{y} layer, which is the first dielectric layer (21), is between 2.00 and 2.10 for the refractive index. In the preferred structure, the change interval of SiₓN_{y} layer, which is the first dielectric layer (21), is between 2.02 and 2.08 for the refractive index.

The thickness of the SiₓN_{y} layer, which is the first dielectric layer (21), is between 10 nm and 30 nm. In the preferred application, the thickness of the SiₓN_{y} layer is between 15 nm and 22 nm. In the more preferred application, the thickness of the SiₓN_{y} layer is between 18 and 21 nm.

At least one first coring structure (22) is positioned between the SiₓN_{y} layer, which is the first dielectric layer (21), and the Ag layer which is the first infrared reflective layer (23). Preferably the first coring structure (22) directly contacts the SiₓN_{y} layer which is the first dielectric layer (21). The first coring structure (22) comprises at least one of NiCr, NiCrOₓ, TiOₓ, ZnAlOₓ, ZnOₓ. The first coring structure (22) comprises at least one first coring layer (221). ZnAIOx is used as the first coring layer (221).

In the present invention, as the first coring layer (221), ZnAlOₓ layer (221) and an absorbent layer (222) are used together. The absorbent layer (222) comprises NiCr. As the first coring structure (22), in case the absorbent layer (222) is also used together with the first coring layer (221), the thickness of the absorbent layer (222) is between 0.5 nm and 1.5 nm. In the preferred application, in case the absorbent layer (222) is used together with the first coring layer (221) in the first coring structure (22), its thickness is between 0.9 nm and 1.2 nm.

In case preferably metallic NiCr is used as the absorbent layer (222) in the coring structure (22), the adhesion characteristics of the Ag layer which is the first infrared reflective layer (23) are improved and it supports improving of the resistance of the coating (20).

The thickness of the first coring layer (221) is between 15 nm and 25 nm. In the preferred application, the thickness of the first coring layer (221) is between 18 nm and 23 nm. In a more preferred application, the thickness of the first coring layer (221) is between 19 nm and 22 nm. The first coring structure (22) totally has a thickness between 15 nm and 28 nm. In an application of the present invention, the first coring structure (22) totally has a thickness between 18 nm and 25 nm. Preferably the first coring structure (22) totally has a thickness between 20 nm and 24 nm.

There is an intermediate dielectric structure (25) positioned between the first infrared reflective layer (23) and the second infrared reflective layer (26) and which separates the first infrared reflective layer (23) and the second infrared reflective layer (26) from each other and which provides reaching of the low-e layer (20) arrangement to the targeted performance.

Said intermediate dielectric structure (25) comprises at least one second coring layer (253) positioned in the vicinity of the dielectric layer together with at least one dielectric layer. A ZnAlOₓ layer is used as the second coring layer (253).

The intermediate dielectric structure (25) comprises a second dielectric layer (251); a third dielectric layer (252) and second coring layer (253). The intermediate dielectric structure (25) is positioned in a manner directly contacting the Ag layer which is the second infrared reflective layer (26). In the present invention, ZnAlOₓ is used as the second dielectric layer (251) and SiₓN_{y} is used as the third dielectric layer (252).

The thicknesses and structures of dielectric layers of said intermediate dielectric structure (25) are optimized separately, and the glass (10) side and the coating side create greater number of options in obtaining the values targeted for the reflection and color values. The sandwich form of the intermediate dielectric structure (25) provides optimization of the reflection and color values, and moreover, it is required for improving the opto-electronic characteristics of the Ag layer which is the second infrared reflective layer (26).

In other words;
In case the intermediate dielectric structure (25) is formed by a single and thick layer, the probability of the intermediate dielectric structure (25), aimed to be amorphous, showing a crystalline structure partially and/or completely by means of the effect of the thermal treatment is increased. While the layer, used as coring and which is in direct contact with Ag which is the second infrared reflective layer (26), grows on the layer which contacts the other surface thereof, it is preferred that this layer has an amorphous structure in order for the layer not to be affected by the crystallization in an unfavorable manner. In the invention, Ag layer which is the second infrared reflective layer (26) and ZnAlOₓ which is the second coring layer (253) are in direct contact. SiₓN_{y}, which is the third dielectric layer (252) and which has an amorphous structure, contacts the other surface of ZnAlOₓ which is the second coring layer (253). Thus, a problem of incompliancy of the crystalline and thus, the risk of affecting the crystallization of the second coring layer (253) structure and the risk of formation of undesired residue stress can be reduced. The sensitivity in the second coring layer (253) provides growing of the second infrared layer (26) in the required crystallographic orientation. The intermediate dielectric structure (25) has a total thickness between 75 nm and 105 nm. In the preferred application, the intermediate dielectric structure (25) has a total thickness between 80 nm and 100 nm. More preferably, the intermediate dielectric structure (25) has a total thickness between 88 nm and 98 nm.

An upper dielectric structure (27) is positioned on the second infrared reflective layer (26). Said upper dielectric structure (27) comprises a second barrier layer (271) positioned in the vicinity of the Ag layer which is the second infrared reflective layer (26); a fourth dielectric layer (272) and an upper dielectric layer (273). A ZnAlOₓ layer is used as the fourth dielectric layer (272). The thickness of the ZnAlOₓ layer which is the fourth dielectric layer (272) is between 10 nm and 25 nm. In the preferred application, the thickness of the ZnAlOₓ layer which is the fourth dielectric layer (272) is between 13 nm and 20 nm. In the more preferred application, the thickness of the ZnAlOₓ layer which is the fourth dielectric layer (272) is between 15 nm and 18 nm. The total thickness of the upper dielectric structure (27) comprising at least three layers coated onto each other is 35 nm and 50 nm. Preferably, the total thickness of the upper dielectric structure (27) is between 38 nm and 48 nm.

The thickness of the ZnAlOₓ layer which is the second dielectric layer (251) provided in the intermediate dielectric structure (25) is between 20 nm and 35 nm. In the preferred application, the thickness of the ZnAlOₓ layer which is the second dielectric layer (251) is between 23 nm and 31 nm. In the more preferred application, the thickness of the ZnAlOₓ layer which is the second dielectric layer (251) is between 26 nm and 29 nm. The refraction index range for ZnAlOₓ used as the first coring layer (221), the second dielectric layer (251), the second coring layer (253) and the fourth dielectric layer (272) is between 1.98 and 2.08. In the preferred embodiment, the refraction index range for ZnAlOₓ used as the first coring layer (221), the second dielectric layer (251), the second coring layer (253) and the fourth dielectric layer (272) is between 2.0 and 2.06.

A SiₓN_{y} layer is used as said third dielectric layer (252). In the preferred application, SiₓN_{y} layer is used as the third dielectric layer (252). The thickness of the SiₓN_{y} layer which is the third dielectric layer (252) is between 32 nm and 47 nm. In the preferred application, the thickness of the SiₓN_{y} layer which is the third dielectric layer (252) is between 35 nm and 45 nm. In the more preferred application, the thickness of the SiₓN_{y} layer which is the third dielectric layer (252) is between 37 nm and 41 nm.

The thickness of the ZnAlOₓ layer which is the second coring layer (253) is between 20 nm and 30 nm. In the preferred application, the thickness of the ZnAlOₓ layer which is the second coring layer (253) is between 21 nm and 28 nm. In the more preferred application, the thickness of the ZnAlOₓ layer which is the second coring layer (253) is between 23 nm and 27 nm.

In order to obtain transmittance and reflection values aimed for the low-e coated (20) products regarding the subject matter architectural use, the thicknesses of the first infrared reflective layer (23) and the second infrared reflective layer (26) are between 7 nm and 17 nm. In the preferred application, the thicknesses of the first infrared reflective layer (23) and the second infrared reflective layer (26) are between 8 nm and 15 nm. More specifically, in order to obtain the targeted performance value and in order to obtain low inner and outer reflection values in the visible region and the desired color properties, the thicknesses of the first infrared reflective layer (23) and the second infrared reflective layer (26) are between 10 nm and 12 nm. In order to reach the targeted selectivity and optical performance, the product shall have two separate infrared reflective layers comprising silver. The ratio of the thickness of the first infrared reflective layer (23) and the second infrared reflective layer (26) is between 0.7 and 1.4. Preferably, ratio of the thickness of the first infrared reflective layer (23) and the second infrared reflective layer (26) is between 0.8 and 1.2.

The visible region transmittance value prior to thermal treatment is preferred to be between 45% and 65% where the targeted performance value is for the usage of 6 mm lower glass (10) as single glass (10). More preferably, it shall be between 50% and 60%, in a more preferable structure, it shall be between 52% and 58%. For usage of 6 mm lower glass (10) as single glass (10), the direct solar power transmittance value prior to the thermal treatment is preferred to be between 20% and 40%. More preferably, it shall be between 24% and 34%, and in a more preferred structure, it shall be between 26% and 33%. Moreover, this performance shall be supported to be obtained by means of the optimization of all other dielectric layers.

In the subject matter low-e coating (20), there is a first barrier layer (24) and a second barrier layer (271). NiCrOₓ layers are used as the first barrier layer (24) and as the second barrier layer (271).

The thickness of the NiCrOₓ layer which is the first barrier layer (24) is between 1.0 nm and 2.4 nm. In the preferred application, the thickness of the NiCrOx layer which is the first barrier layer (24) is between 1.4 nm and 2.0 nm. The thickness of the NiCrOₓ layer which is the second barrier layer (271) is between 1.2 nm and 2.6 nm. In the preferred application, the thickness of the NiCrOₓ layer which is the second barrier layer (271) is between 1.6 nm and 2.2 nm.

NiCrOₓ layers, which are used as the first barrier layer (24) and as the second barrier layer (271), are used for not affecting the Ag layers by the process gases used for production of layers coming after Ag layers which are the first infrared reflective layer (23) and the second infrared reflective layer (26). At the same time, NiCrOₓ layers eliminate probable adhesion weakness prior to thermal treatment by providing structural compliancy in metallic and dielectric passage between dielectric layers which will come after Ag layers. Moreover, NiCrOₓ layers prevent Ag layers from being oxidized and from being subjected to structural deterioration in the thermal treatment and/or tempering processes.

The final layer of the low-e coating (20) is an upper dielectric layer (273). In case SiOₓ layer and TiOₓ layer are used together as the upper dielectric layer (273), the mechanical resistance of the low-e coating (20) is weakened after thermal treatment, and micro-scratches occur on the surface of the low-e coating (20).

In case SiOₓN_{y} layer is preferred as the upper dielectric layer (273) and in case it is used so as to be in direct contact with NiCrOₓ which is a second barrier layer (271), the NiCrOₓ layer and the SiOₓN_{y} layer show incompliant behavior with each other, and delamination occurs after thermal treatment For this purpose, a fourth dielectric layer (272) is added between SiOₓN_{y}, which is the upper dielectric layer (273), and NiCrOₓ layer, which is the second barrier layer (271) provided in the subject matter low-e coating (20), and the adhesion performance between the layers is increased. ZnAlOₓ layer is used as the fourth dielectric layer (272).

In case SiOₓN_{y} layer is used as the upper dielectric layer (273) instead of the SiₓN_{y} layer, since the refraction index of the SiOₓN_{y} layer is lower than the SiₓN_{y} layer, the same optical behavior can be obtained by means of a thicker SiOₓN_{y} layer. Thus, by using a thicker upper dielectric layer (273), the mechanical resistance of the coating is increased. The thickness of the SiOₓN_{y} layer which is the upper dielectric layer (273) is between 20 nm and 35 nm. In the preferred application, the thickness of the SiOₓN_{y} layer which is the upper dielectric layer (273) is between 21 nm and 30 nm. In a more preferred application, the thickness of the SiOₓN_{y} layer is between 23 nm and 28 nm.

**Table 1. Glass (10) side (R_{g}) color values measured in different view points after thermal treatment of the low-e coating (20) realized onto the lower glass (10) with thickness of 6 mm**

| | **8°** | **30°** | **45°** | **60°** |
|---|---|---|---|---|
| **R_{g} a*** | -0.9 | -2.5 | -3.6 | -2.3 |
| **R_{g} b*** | -7.6 | -5.4 | -5.1 | -8.6 |
| **Delta (Δ) a*** | | -1.6 | -2.7 | -1.4 |
| **Delta (Δ) b*** | | 2.2 | 2.6 | -1.0 |

As a result of application of the low-e coating (20) onto the 6 mm glass (10) surface obtained by means of the above mentioned layer arrangement, the color values obtained after thermal treatment are given in Table 1. In Table 1, the R_{g}a* and R_{g}b* codes show the glass (10) side color values. The example, where said low-e coating (20) is applied onto the 6 mm lower glass (10), can be obtained within this invention in the negative region including 60 degrees depending on the calculated reflection a* and b* values by taking into consideration the measurement made by means of the glass (10) (through the uncoated surface) after thermal process. The change of the reflection color a* and b* values of said glass (10) side depending on angled view is under 3 points and in the negative region in accordance with orthogonal view.

## Claims

1. A low-e coated (20) glass (10) which can be treated thermally and developed by means of accumulating onto each other on a glass substrate (10) and comprising pluralities of thin films having:
• a first dielectric layer (21) comprising SiₓN_{y} with a thickness between 15 nm - 22 nm provided in a manner directly contacting onto the substrate;
• a first infrared reflective layer (23) being silver with a thickness between 8 nm - 15 nm positioned on said first dielectric layer (21);
• a first barrier layer (24) being NiCrOx and with a thickness between 1 nm - 2.4 nm positioned on said first infrared layer (23);
• a second infrared reflective layer (26) being silver with a thickness between 8 nm - 15 nm positioned on said first barrier layer (24) and an upper dielectric structure (27) with a thickness between 35 nm - 50 nm positioned at the continuation thereof,
said invention is **characterized in that**
• said low-e coating (20) comprises a first coring structure (22) with a total thickness between 18 nm - 25 nm and positioned between the first dielectric layer (21) and the first infrared reflective layer (23) and comprising a first coring layer (221) being ZnAlOₓ and an absorbing layer (222) comprising NiCr and which directly contacts the first infrared reflective layer (23),
• an intermediate dielectric structure (25) with a total thickness between 80 nm - 100 nm and which is positioned under the second infrared layer (26) in a manner directly contacting thereto and which provides reaching of the glass (10), whereon it is coated, to the targeted performance values and comprising a second dielectric layer (251) being ZnAlOₓ, a third dielectric layer (252) being SiₓN_{y} and second coring layer (253) being ZnAlOₓ;
• said upper dielectric structure (27) comprises a second barrier layer (271) being NiCrOₓ layer; a fourth dielectric layer (272) being ZnAlOₓ and an upper dielectric layer (273) being SiOₓN_{y},
• reflection a* and b* color values of the low-e coated (20) glass (10) on the glass (10) side are at 60° and lower angle and the change depending on the angled view is lower than 3 points and in the negative region when compared with orthogonal view.

2. A low-e coated (20) glass (10) according to claim 1, wherein the thickness of the second coring layer (253) is between 21 nm - 28 nm.

3. A low-e coated (20) glass (10) according to claim 1, wherein the thickness of the second dielectric layer (251) is between 23 nm - 31 nm and the thickness of said third dielectric layer (252) is between 35 nm - 45 nm.

4. A low-e coated (20) glass (10) according to claim 1, wherein in the low-e coating (20), said second dielectric layer (251) and said third dielectric layer (252) directly contact each other.

5. A low-e coated (20) glass (10) according to claim 1, wherein in the low-e coating (20), a surface of the third dielectric layer (252) contacts the second coring layer (253).

6. A low-e coated (20) glass (10) according to claim 1, wherein the third dielectric layer (252) provided in the low-e layer (20) has an amorphous structure.

7. A low-e coated (20) glass (10) according to claim 2, wherein in the low-e coating (20), said second coring layer (253) directly contacts the second infrared layer (26).

8. A low-e coated (20) glass (10) according to claim 1, wherein said first coring layer (221) is between 18 nm - 23 nm.

9. A low-e coated (20) glass (10) according to claim 1, wherein the upper dielectric structure (27) of the low-e coating (20) comprises an upper dielectric layer (273) having a thickness between 21 nm - 30 nm and a fourth dielectric layer (272) having a thickness between 13 nm - 20 nm positioned under said upper dielectric layer (273) and which prevents delamination.

10. A low-e coated (20) glass (10) according to claim 1, wherein the ratio of the thicknesses of the first infrared reflective layer (23) and the second infrared reflective layer (26) in the low-e coating (20) is between 0.8 and 1.2.

## Patentansprüche

1. Low-E-beschichtetes (20) Glas (10), das thermisch behandelt und durch Aufeinanderschichten auf einem Glassubstrat (10) entwickelt werden kann und mehrere dünne Filme mit umfasst:
• einer ersten dielektrischen Schicht (21) aus SiₓN_{y} mit einer Dicke zwischen 15 nm - 22 nm, die direkt auf dem Substrat aufliegt;
• einer ersten infrarotreflektierenden Schicht (23) aus Silber mit einer Dicke zwischen 8 nm - 15 nm, die auf der ersten dielektrischen Schicht (21) angeordnet ist;
• einer ersten Sperrschicht (24), die aus NiCrOx besteht und eine Dicke zwischen 1 nm - 2.4 nm aufweist, die auf der ersten Infrarotschicht (23) angeordnet ist;
• einer zweiten infrarotreflektierenden Schicht (26) aus Silber mit einer Dicke zwischen 8 nm - 15 nm, die auf der ersten Sperrschicht (24) angeordnet ist, und einer oberen dielektrischen Struktur (27) mit einer Dicke zwischen 35 nm - 50 nm, die an deren Fortsetzung angeordnet ist,
die Erfindung **dadurch gekennzeichnet ist, dass**
• die Low-E-Beschichtung (20) eine erste Kernstruktur (22) mit einer Gesamtdicke zwischen 18 nm - 25 nm umfasst, die zwischen der ersten dielektrischen Schicht (21) und der ersten infrarotreflektierenden Schicht (23) angeordnet ist und eine erste Kernschicht (221) aus ZnAlOₓ und eine absorbierende Schicht (222) umfasst, die NiCr umfasst und die erste infrarotreflektierende Schicht (23) direkt berührt,
• eine dielektrische Zwischenstruktur (25) mit einer Gesamtdicke zwischen 80 nm - 100 nm, die unter der zweiten Infrarotschicht (26) in direktem Kontakt mit dieser angeordnet ist und die dafür sorgt, dass das Glas (10), auf dem es beschichtet ist, die angestrebten Leistungswerte erreicht, eine zweite dielektrische Schicht (251) aus ZnAlOₓ, eine dritte dielektrische Schicht (252) aus SiₓN_{y} und eine zweite Kernschicht (253) aus ZnAlOₓ umfasst;
• wobei die obere dielektrische Struktur (27) eine zweite Sperrschicht (271), die eine NiCrOₓ-Schicht ist, eine vierte dielektrische Schicht (272) aus ZnAlOₓ, und eine obere dielektrische Schicht (273) aus SiOₓN_{y}, umfasst,
• die Farbwerte der Reflexion a* und b* des Low-E-beschichteten (20) Glases (10) auf der Seite des Glases (10) liegen bei einem Winkel von 60° und darunter, und die Veränderung in Abhängigkeit vom Blickwinkel ist geringer als 3 Punkte und liegt im negativen Bereich im Vergleich zur orthogonalen Ansicht.

2. Low-E-beschichtetes (20) Glas (10) nach Anspruch 1, wobei die Dicke der zweiten Kernschicht (253) zwischen 21 nm - 28 nm liegt.

3. Low-E-beschichtetes (20) Glas (10) nach Anspruch 1, wobei die Dicke der zweiten dielektrischen Schicht (251) zwischen 23 nm - 31 nm und die Dicke der dritten dielektrischen Schicht (252) zwischen 35 nm - 45 nm liegt.

4. Low-E-beschichtetes (20) Glas (10) nach Anspruch 1, wobei bei der Low-E-Beschichtung (20) die zweite dielektrische Schicht (251) und die dritte dielektrische Schicht (252) einander direkt berühren.

5. Low-E-beschichtetes (20) Glas (10) nach Anspruch 1, wobei bei der Low-E-Beschichtung (20) eine Oberfläche der dritten dielektrischen Schicht (252) die zweite Kernschicht (253) berührt.

6. Low-E-beschichtetes (20) Glas (10) nach Anspruch 1, wobei die dritte dielektrische Schicht (252), die in der Low-E-Schicht (20) vorgesehen ist, eine amorphe Struktur aufweist.

7. Low-E-beschichtetes (20) Glas (10) nach Anspruch 2, wobei bei der Low-E-Beschichtung (20) die zweite Kernschicht (253) die zweite Infrarotschicht (26) direkt berührt.

8. Low-E-beschichtetes (20) Glas (10) nach Anspruch 1, wobei die erste Kernschicht (221) zwischen 18 nm - 23 nm liegt.

9. Low-E-beschichtetes (20) Glas (10) nach Anspruch 1, wobei die obere dielektrische Struktur (27) der Low-E-Beschichtung (20) eine obere dielektrische Schicht (273) mit einer Dicke zwischen 21 nm - 30 nm und eine vierte dielektrische Schicht (272) mit einer Dicke zwischen 13 nm - 20 nm umfasst, die unter der oberen dielektrischen Schicht (273) angeordnet ist und die eine Delaminierung verhindert.

10. Low-E-beschichtetes (20) Glas (10) nach Anspruch 1, wobei das Verhältnis der Dicken der ersten infrarotreflektierenden Schicht (23) und der zweiten infrarotreflektierenden Schicht (26) in der Low-E-Beschichtung (20) zwischen 0.8 - 1.2 liegt.

## Revendications

1. Verre (10) enduit (20) de low-e pouvant être traité thermiquement et développé par accumulation sur un substrat de verre (10) et comprenant des pluralités de films minces ayant :
• une première couche (21) diélectrique comprenant du SiₓN_{y} d'une épaisseur comprise entre 15 nm - 22 nm, fournie de manière à entrer directement en contact avec le substrat;
• une première couche (23) réfléchissante infrarouge en argent d'une épaisseur comprise entre 8 nm - 15 nm positionnée sur ladite première couche (21) diélectrique ;
• une première couche (24) barrière en NiCrOx d'une épaisseur comprise entre 1 nm - 2.4 nm positionnée sur ladite première couche (23) infrarouge;
• une deuxième couche (26) infrarouge réfléchissante, en argent, d'une épaisseur comprise entre 8 nm - 15 nm, placée sur ladite première couche (24) barrière et une structure (27) diélectrique supérieure d'une épaisseur comprise entre 35 nm - 50 nm, placée dans le prolongement de celle-ci, ladite invention est **caractérisée en ce que**
• ledit enduit (20) de low-e comprend une première structure (22) de carottage d'une épaisseur totale comprise entre 18 nm - 25 nm, placée entre la première couche (21) diélectrique et la première couche (23) infrarouge réfléchissante et comprenant une première couche (221) de carottage constituée de ZnAlOₓ et une couche (222) absorbante constituée de NiCr et en contact direct avec la première couche (23) infrarouge réfléchissante,
• une structure (25) diélectrique intermédiaire d'une épaisseur totale comprise entre 80 nm - 100 nm, placée sous la deuxième couche (26) infrarouge en contact direct avec elle et permettant au verre (10), sur lequel elle est enduite, d'atteindre les valeurs de performance visées, et comprenant une deuxième couche (251) diélectrique en ZnAlOₓ, une troisième couche (252) diélectrique en SiₓN_{y} et une deuxième couche (253) de noyautage en ZnAlOₓ ;
• ladite structure (27) diélectrique supérieure comprend une deuxième couche (271) barrière constituée d'une couche de NiCrOₓ ; une quatrième couche (272) diélectrique constituée de ZnAlOₓ et une couche (273) diélectrique supérieure constituée de SiOₓN_{y},
• les valeurs de couleur de réflexion a* et b* du verre (10) enduit (20) de low-e du côté du verre (10) sont à un angle de 60° et moins et le changement en fonction de l'angle de vue est inférieur à 3 points et dans la zone négative par rapport à une vue orthogonale.

2. Verre (10) enduit (20) de low-e selon la revendication 1, dans lequel l'épaisseur de la seconde couche (253) de carottage est comprise entre 21 nm - 28 nm.

3. Verre (10) enduit (20) de low-e selon la revendication 1, dans lequel l'épaisseur de la deuxième couche (251) diélectrique est comprise entre 23 nm - 31 nm et l'épaisseur de ladite troisième couche (252) diélectrique est comprise entre 35 nm - 45 nm.

4. Verre (10) enduit (20) de low-e selon la revendication 1, dans lequel, dans l'enduit (20) de low-e, ladite deuxième couche (251) diélectrique et ladite troisième couche (252) diélectrique sont directement en contact l'une avec l'autre.

5. Verre (10) enduit (20) de low-e selon la revendication 1, dans lequel, dans l'enduit (20) de low-e, une surface de la troisième couche (252) diélectrique est en contact avec la deuxième couche (253) de carottage.

6. Verre (10) enduit (20) de low-e selon la revendication 1, dans lequel, la troisième couche (252) diélectrique fournie dans la couche (20) de low-e a une structure amorphe.

7. Verre (10) enduit (20) de low-e selon la revendication 2, dans lequel, dans l'enduit (20) de low-e, ladite deuxième couche (253) de carottage est en contact direct avec la deuxième couche (26) infrarouge.

8. Verre (10) enduit (20) de low-e selon la revendication 1, dans lequel ladite première couche (221) de carottage est comprise entre 18 nm - 23 nm.

9. Verre (10) enduit (20) de low-e selon la revendication 1, dans lequel la structure (27) diélectrique supérieure de l'enduit (20) de low-e comprend une couche (273) diélectrique supérieure d'une épaisseur comprise entre 21 nm - 30 nm et une quatrième couche (272) diélectrique d'une épaisseur comprise entre 13 nm - 20 nm, placée sous ladite couche (273) diélectrique supérieure et qui empêche la délamination.

10. Verre (10) enduit (20) de low-e selon la revendication 1, dans lequel le rapport des épaisseurs de la première couche (23) infrarouge réfléchissante et de la seconde couche (26) infrarouge réfléchissante dans l'enduit (20) de low-e est compris entre 0.8 et 1.2.
